# EUROPEAN PATENT SPECIFICATION

(11) **EP 3 396 312 B1**
(45) Date of publication and mention of the grant of the patent: **27.11.2019**
(21) Application number: 17168310.5
(22) Date of filing: 26.04.2017
(51) Int. Cl.: G01B 13/08, G01B 13/20

(54) **A DEVICE AND A METHOD FOR DETERMINING OPERATING RELATED PARAMETER OF A WIRE**
VORRICHTUNG UND VERFAHREN ZUR BESTIMMUNG OPERATIONSBEDINGTER PARAMETER EINES DRAHTES
DISPOSITIF ET PROCÉDÉ DE DÉTERMINATION DE PARAMÈTRE ASSOCIÉ AU FONCTIONNEMENT D'UN FIL

(43) Date of publication of application: 31.10.2018
(73) Proprietor: Vestel Elektronik Sanayi ve Ticaret A.S., 45030 Manisa (TR)
(72) Inventor: YALIN, Nevzat, 45030 Manisa (TR); ÖZEN, Erol, 45030 Manisa (TR); ÖZKÜCÜK, Serhat, 16130 Bursa/Nilüfer (TR)
(74) Representative: Ascherl, Andreas

(56) References cited:
- US-A- 2 649 573
- US-A- 5 596 258

## Description

This invention refers to a device for determining an operating related parameter of a wire according to claim 1, and a method for determining an operating related parameter of a wire according to claim 9.

### Background of the Invention

Electrical chargeable cars contain a battery system. This battery system provides the electrical energy to a car for moving and for performing other functionalities of car. Electrical cars are charged by a charger system in charging stations. There are several types of battery systems and charge systems. The most common charge systems are AC-AC and AC-DC.

A battery of car and the charging station should be connected to each other through a wire. High current flows on the wire or charger cable which should be controlled. This is important in the light of safety and efficiency of the charging operation. However, to maintain the safety and efficiency during current flow, charge current capacity of the wire connecting the battery and the charger system should be known. For different battery systems there are different charge current capacities such as 13A, 20A, 32A and 63A. The car charge current is transmitted by these charge cables. These cables are sensed by charge station by measuring integrated extra resistance. According to standards, 13A current capacity cable produces 1.5kOhm integrated extra resistance. Similarly 20A, 32A and 63A cables produces 680 Ohm, 220 Ohm, and 100 Ohm integrated extra resistance respectively. Charge station senses the cable capacity by measuring these resistances and do not send high current which is over the cable's limit. This is restrictive for the user because users can use only these four types of cables or wires according to the standards. The second problem is about safety. When the cable capacity resistance breaks down or the integrated extra resistance's value is incorrect, then charging operation fails, since the charge cable can not be used for charge operation without integrated resistance.

US5596258A discloses charging apparatus and method for charging a battery of a battery driven electric vehicle, when a communication abnormality between a charger side of a charging station and the battery side of the electric vehicle is determined to occur, a power supply of the charger starts the charge to the battery in a special charge pattern (protocol) of mode in the occurrence of the communication abnormality.

US2015120109A1 discloses a system for use in controlling a charging system for an electric vehicle based on at least one selection from user relating to at least one of a charging rate setting and a charging preference setting for controlling a charging rate at which a charger in the electric vehicle draws current from a power supply.

Shortcomings of the above documents are that those systems according to the prior art cannot work with all cable types.

US 2 649 573 A discloses a method and device for determining the cross-section of an elongated object (could be a wire). The elongated object is placed into an internal perimeter of a body of a device. The body is defined by an external perimeter and an internal perimeter, has a first empty space within the body and is made of a flexible material. The first empty space is adapted to be filled with a gas for expanding the body such that the body forms grip onto the elongated object. Once the body forms the grip onto the elongated object, a voltage is induced by a magnetic field in a pick-up coil around the elongated member. From this voltage the cross-section of the elongated object is determined.

### Object of the Invention

It is therefore the object of the present invention is to provide a mechanism for determining the charge current capacity for a wire, and to further identify and measure the flow of current through a wire.

### Description of the Invention

The before mentioned object is solved by a device according to claim 1.

This provides an accurate determination of cross-section of the wire. The cross-section of wire shall help to further identify manually or automatically various functional characterstics of the wire including physical strength, conductance, etc.

Further preferred embodiments are subject-matter of dependent claims and/or of the following specification parts.

According to a preferred embodiment according to the invention, the device comprises a lookup table comprising charge current capacity for a wire with respect to cross-section of the wire, wherein the processor queries the lookup table and to identify a charge current capacity of the wire based on the cross-section of the wire.

This embodiment is beneficial as it estimates capacity of the wire to allow a current to pass through.

According to another embodiment of the invention, the vibration element is further adapted to vibrate with a changed vibration when a current is flown through the wire, and which results in expansion of the gas due to heat generation in wire, the vibration sensor senses the changed vibration and generates a changed vibration value, the processor receives the changed vibration value and identifies the flow of current through the wire.

This embodiment is helpful, as it determines whether the current is flowing through the wire or not. In case of a fault, the current shall not flow through the wire, and hence there shall not be any further expansion of the gas, and the vibration element do not further vibrates. Hence, it accurately determines if there is flow of current or not through the wire. Even, if there is less or more flow of current through a wire during a unit time, that shall also be accureately identified, as at various amout of flow of current, there shall be variable heating of wire, which result in variable expansion of the gas, and hence different vibrations of vibration element for different flow of current. The flow of current at a particular unit time in the wire can be accurately identified with this embodiment. Even small changes in current flow can be easily identified through this embodiment.

According to a further embodiment of the device, the vibration element comprises a movable element and a set of springs, wherein the movable element is attached to the springs at its surface and the springs are attached to a fixture extending from a wall of the container or the wall of the container itself, the movable element is adapted to vibrate when there is a flow of gas within the gas container and the vibration sensor captures the vibration.

This embodiment is beneficial, as it provides an easy to make and cost-effective vibration element.

According to another embodiment of the device, the movable element is rotatable, and connected to two springs.

This embodiment is beneficial, as it provides another easy to make and cost-effective vibration element, and brings regularity and accuracy in operating of the vibration element.

According to a further preferred embodiment of the device, the movable element is in "S" shape, such that the springs are attached to the movable element at curved portion of the vibration element.

This embodiment is beneficial, as it provides yet another easy to make and cost-effective vibration element, and brings further regularity and accuracy in operating of the vibration element.

According to a further embodiment of the device, the processor is adapted to receive the vibration values at various time intervals, to process the vibration values, and to measure amount of current flow during the time interval.

This embodiment is beneficial, as it helps to estimate the amount current, which has flown through the wire in a time interval. It can help to estimate commercials for charging, or time left to charge the battery, or to estimate how much battery is charged or left to charge, etc.

According to another embodiment of the device, the gas is having a high expansion coefficient.

This embodiment is beneficial, as it helps to provide an efficient conversion from heat energy of wire to vibration of the vibration element, and shall help to notice even smallest change in current flow through wire, small current fluctuations though wire, etc.

The before mentioned object is also solved by a method according to claim 9.

According to a further preferred embodiment of the invention, the method further includes steps of:
- querying a lookup table by the processor, wherein the a lookup table comprising a charge current capacity for a wire with respect to cross-section of the wire;
- identifying a charge current capacity of the wire based on the cross-section of the wire. According to a further embodiment of the invention, the method further includes steps of:
- vibrating of the vibration element with a changed vibration when a current is flown through the wire;
- expanding of the gas due to heat generation in the wire;
- sensing the changed vibration by the vibration sensor, and generating a changed vibration value;
- receiving the changed vibration value by the processor and identifying the flow of current through the wire.

According to another embodiment of the invention, the method further includes steps of receiving the vibration values at various time intervals by the processor, processing of the vibration values by the processor, and to measure amount of current flow during the time interval.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawing

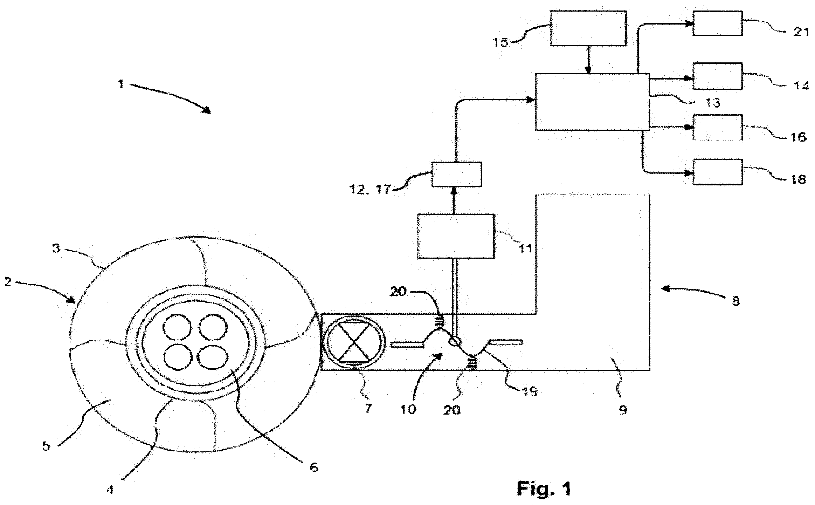

Fig. 1 shows a device for determining an operating related parameter of a wire according to the invention.

### Detailed Description of the Drawing

Fig. 1 shows a device 1 which is used for determining operating related parameters of a wire 6, like cross-section of wire 6, charge current capacity of the wire 6, confirmation regarding flow of current through the wire 6, amount of current flown through the wire 6 in a unit time, total amount of current flown through the wire 6 since connecting the wire to a charging system, etc.

The device 1 according to the invention includes a body 2 defined by an external perimeter 3 and an internal perimeter 4, and has a first empty space 5 within the body 2. The body 2 is made up of flexible material, so that it can inflate or deflate when a gas is pumped in or pumped out of the body 2.

The body 2 is connected to a gas container 8, which has a second empty space 9, and in that empty space 9 a vibration element 10 is provided which vibrates on flow of air into the gas container 8. The gas is allowed to flow into the gas container 8 from the body 2, or out of the gas container 8 into the body 2, when a valve 7 is opened.

The device 1 also includes a vibration sensor 11, which captures or senses vibration of the vibration element 10 and processes the vibration to generate a vibration value 12, 17.

The device 1 also includes a processor 13, which receives the vibration value 12, 17 and processes the vibration value 12, 17 to determine an operating related parameter for the wire 6.

To identify cross-section 14 of the wire 6, one of the operating related parameter, the wire 6 is passed through the internal perimeter 4 of the body 2, wherein thereafter the gas is pumped into the body 2. When the gas is pumped, the body 2 inflates or expands, such that the internal perimeter 4 forms a grip onto the wire 6. Once the grip is formed, the valve 7 is opened to allow flow of the gas from the body 2 into the gas container 8. Due to the flow of the gas, the vibration element 10 vibrates and produces a first vibration. The first vibration is captured by the vibration sensor 11, which processes it to determine a first vibration related value 12. This first vibration related value 12 is further received by the processor 13. The processor 13 processes the first vibration related value 12 and determine the cross-section 14 of the wire 6.

The device 1 also includes a lookup table 15, which has a charge current capacity for a wire with respect to cross-section of the wire. The processor 13 queries the lookup table 15 and identifies a charge current capacity 16 of the wire 6 based on the cross-section 14 of the wire 6. In an alternate embodiment, the charge current capacity 16 of the wire 6 need not be determined by the device 1, rather the charge current capacity 16 of the wire 6 can be identified manually by a user based on his expertise when he knows the cross-section 14 of the wire 6, or the lookup table 15 can be placed in a remote computing device, and the processor 13 transfers the crosses-section 14 of the wire 6 to the remote computing device, and the remote computing device identifies the charge current capacity 16 of the wire using the lookup table 15.

When the current flows through the wire 6, the wire gets heated and which in turn heats the gas filled in the body 2. When the gas heats, it gets expanded, which further results into further flow of gas into the gas container 8. This leads to production of a changed vibration in the vibration element 10. The vibration sensor 11 senses the changed vibration and generates a changed vibration value 17. The processor 13 receives the changed vibration value 17, processes the changed vibration value 17 and identifies the flow 18 of current through the wire. This helps to confirm flow of the current through the wire 6. The processor 13 also identifies amount of current flowing through the wire 6 in a unit time based on the changed vibration value 17. Like previously, in an alternate embodiment, the vibration value 17 can be transmitted remotely to remote computing device for further processing and identification of the flow 18 of the current.

To estimate the amount 21 of current flown through the wire 6 in a time interval, the vibration values 12, 17 are received by the processor 13 regularly, so that the processor processes the vibration values 12, 17 and estimates the amount 21 of current flown through the wire 6. In an alternate embodiment, the device 1 need not estimate the amount 21 of the current flown through the wire 6 in a time interval, rather vibration values 12, 17 are remotely transferred to a remote computing device for processing and estimation of the amount 21 of current flow through the wire 6 during the time interval.

In case, if the amount 21 of the current flown in a complete charge operation is to be estimated, the same can also be estimated by the device 1 using the vibration values 12, 17. When the charging operation stops, the wire gets colder, and accordingly the gas contracts, and a reverse flow of gas occurs from the gas container 8 into the body 2, which shall create another changed vibration, and accordingly another changed vibration value 17 is generated by the vibration sensor 11. The processor 13 stores various vibration values 12, 17 into a memory, so that it retrieve the values 12, 17 from the memory and estimates total amount 21 of current flown through the wire during charge operation. In one scenario, the processor stores amount of current flowing through the wire 6 in a unit time for various vibration values 12, 17 during the charge operation, and retrieves these amount of flow of current in a unit time to identify total amount 21 of current flown through the wire during a charging operation.

In one embodiment of the invention, the amount 21 for each charge operations are stored for future analysis, like commercial estimation of charging operation, operational efficiency of the device, usage of the device, etc.

The gas used for pumping into the body 2 can be of high expansion coefficient, so that even a small change of heat in wire 6 can result into expansion of the gas, and which can be further captured as changed vibration, and accordingly the changed vibration value 17 is generated.

The vibration element 10 comprises a movable element 19 and two springs 20. The movable element is in "S" shape and is placed in such a way that the curved portions of the element 19 shall be facing towards walls of the gas container 8. The springs are extended between the walls of the gas container 8 and curved portions of the movable element 19. The movable element rotates to exert force onto the springs 20, which compresses or extends the springs 20, and further due to the arrangement, the movable element vibrates.

In an alternative embodiment, the movable element 19 needs not be of "S" shape, however, the element 19 can be in any suitable shape which supports vibrations of the movable element 19.

In another embodiment, the movable element 19 does not need to rotate, however it can be in translational motion and the arrangement of the spring 20 is made in such a motion that movable element 20 can vibrate with support of the spring 20.

In one embodiment, there can be more than one spring 20 to support the movable element 19 to vibrate.

In another embodiment, the spring does not need to be attached to the walls or surface of the gas container 8, however they can be attached to a fixture which extends from the surface or wall of the gas container 8.

The device 1 can also use other types of vibration elements 10 like piezo-electric elements, which can be actuated due to a mechanical force applied during flow of gas into the gas container 8 or out of the gas container 8.

The device 1 can also be used at any place where operation related parameters are required to be identified for a wire, especially during charging operation. These parameters can be related to the current flow capacity of the wire, amount of current passed through the wire at a unit time or during a time interval, or during a charging cycle, time taken for charging a battery with an amount of current through the wire or time taken for a complete charging cycle, fault in the charging operation, etc. The fault in the charging station can be identified, if it is known that the electric switch is still on, however, the device 1 indicates that the changed vibration 17 is sensed which is pertaining to reverse flow of the gas out of the gas container 8. The fault in charging station at initiation of the charging operation can be identified, if no changed vibration value 17 is captured by the vibration sensor 11, and only the first vibration value 12 is senses.

The device 1 is especially useful in electric car charging systems where a user connects an unknown wire to a charging station for charging a battery of the electric car. The device 1 provides not just estimation of current flow through the wire 6, but also ensures safety because it precisely identifies current flow capacity of the wire 6, and also a fault condition in the wire 6.

Thus, the present invention refers to a device 1 for determining an operating related parameter of a wire 6 which includes a body 2 defined by an external perimeter 3 and an internal perimeter 4, and having a first empty space 5 within the body 2, wherein the body 2 is made of a flexible material, wherein a wire 6 is allowable to pass through the internal perimeter 4, the first empty space 5 is adapted to be filled with a gas for expanding the body 2 such that the body forms grip onto the wire, a valve 7 adapted to be opened to allow flow of the gas out of the body 2, a gas container 8 comprising a second empty space 9 and a vibration element 10, wherein the gas is allowed to flow in the second empty space 9 when the valve 7 opens and to actuate the vibration element 10, a vibration sensor 11 adapted to sense a first vibration from the vibration element 10 and to generate a first vibration value 12, and a processor 13 further adapted to receive the first vibration value 12 and to determine a cross-section 14 of the wire 6.

### List of reference numbers

- 1: device
- 2: body
- 3: external perimeter
- 4: internal perimeter
- 5: first empty space
- 6: wire
- 7: valve
- 8: gas container
- 9: second empty space
- 10: vibration element
- 11: vibration sensor
- 12: first vibration value
- 13: processor
- 14: cross-section of the wire
- 15: lookup table
- 16: charge current capacity of the wire
- 17: changed vibration value
- 18: flow of current through the wire
- 19: movable element
- 20: springs
- 21: amount of current flow

## Claims

1. A device (1) for determining an operating related parameter of a wire (6) comprising:
- a body (2) defined by an external perimeter (3) and an internal perimeter (4) and having a first empty space (5) within the body (2), wherein the body (2) is made of a flexible material, wherein a wire (6) is allowable to pass through the internal perimeter (4), the first empty space (5) is adapted to be filled with a gas for expanding the body (2) such that the body forms grip onto the wire;
- a valve (7) adapted to be opened to allow flow of the gas out of the body (2);
- a gas container (8) comprising a second empty space (9) and a vibration element (10), wherein the gas is allowed to flow in the second empty space (9) when the valve (7) opens and to actuate the vibration element (10);
- a vibration sensor (11) adapted to sense a first vibration from the vibration element (10) and to generate a first vibration value (12); and
- a processor (13) adapted to receive and process the first vibration value (12) and to determine a cross-section (14) of the wire (6).

2. The device (1) according to the claim 1 comprising:
- a lookup table (15) comprising a charge current capacity for a wire with respect to cross-section of the wire,
wherein the processor (13) is adapted to query the lookup table (15) and to identify a charge current capacity (16) of the wire (6) based on the cross-section (14) of the wire (6).

3. The device according to any of the claims 1 or 2, wherein the vibration element (10) is further adapted to vibrate with a changed vibration when a current is flown through the wire, and which results in expansion of the gas due to heat generation in wire, the vibration sensor (11) is adapted to sense the changed vibration and to generate a changed vibration value (17), the processor (13) is adapted to receive the changed vibration value (17) and adapted to identify the flow (18) of current through the wire.

4. The device (1) according to any of the claims 1 to 3, wherein the vibration element (10) comprises a movable element (19) and a set of springs (20), wherein the element (19) is attached to the springs (20) at its surface and the springs (20) are attached to a fixture extending from a wall of the gas container (8) or the wall of the container (8) itself, the movable element (19) is adapted to vibrate when there is a flow of gas within the gas container (8) and the vibration sensor (11) is adapted to capture the vibration.

5. The device (1) according to the claim 4, wherein the movable element (19) is rotatable, and connected to two springs (20).

6. The device (1) according to any of the claims 4 or 5, wherein the movable element (19) is in "S" shape such that the springs (20) are attached to the movable element (19) at curved portions of the vibration element (19).

7. The device (1) according to any of the claims 2 to 5, wherein the processor (13) is adapted to receive the vibration values (12, 17) at various time intervals, to process the vibration values (12, 17), and to measure amount (21) of current flow during the time interval.

8. The device (1) according to any of the claims 2 to 6, wherein the gas is having a high expansion coefficient.

9. A method for determining operating related parameter of a wire (6) comprising:
- placing a wire into an internal perimeter (4) of a body (2) of a device (1), wherein the body (2) is defined by an external perimeter (3) and an internal perimeter (4) and has a first empty space (5) within the body (2), the body (2) being made of a flexible material;
- filling the first empty space (5) with a gas for expanding the body (2), so that the body (2) is able to form grip onto the wire (6);
- once the body (2) forms the grip onto the wire (6), opening a valve (7) and allowing flow of the gas out of the body (2) into a second empty space (9) of a gas container (8);
- actuating a vibration element (10) provided in the gas container (8) to provide a first vibration due to the flow of the gas;
- sensing the first vibration by a vibration sensor (11) and generating a first vibration value (12); and
- receiving and processing the first vibration value (12) by a processor (13) and determining a cross-section (14) of the wire (6).

10. The method according to claim 9 comprising:
- querying a lookup table (15) by the processor (13), wherein the lookup table (15) comprising a charge current capacity for a wire with respect to cross-section of the wire; and
- identifying a charge current capacity (16) of the wire (6) based on the cross-section (14) of the wire (6).

11. The method according to claim 10 comprising:
- vibrating of the vibration element (10) with a changed vibration when a current is flown through the wire (6);
- expanding of the gas due to heat generation in the wire (6);
- sensing the changed vibration by the vibration sensor (11), and generating a changed vibration value (17); and
- receiving the changed vibration value (17) by the processor and identifying the flow (18) of current through the wire (6).

12. The method according to any of the claims 10 or 11 comprising receiving the vibration values (12, 17) at various time intervals by the processor (13), processing of the vibration values (12, 17) by the processor (13), and to measure amount (21) of current flow during the time interval.

## Patentansprüche

1. Vorrichtung (1) zum Bestimmen eines betriebsbezogenen Parameters eines Drahtes (6), umfassend:
- einen Körper (2), der durch einen äußeren Umfang (3) und einen inneren Umfang (4) definiert ist und einen ersten leeren Raum (5) innerhalb des Körpers (2) aufweist, wobei der Körper (2) aus einem flexiblen Material hergestellt ist, wobei ein Draht (6) durch den inneren Umfang (4) hindurchgehen kann, wobei der erste leere Raum (5) mit einem Gas gefüllt werden kann, um den Körper (2) so zu erweitern, dass der Körper einen Griff auf den Draht bildet;
- ein Ventil (7), das zum Öffnen ausgelegt ist, um den Durchfluss des Gases aus dem Körper (2) zu ermöglichen;
- einen Gasbehälter (8), der einen zweiten Hohlraum (9) und ein Vibrationselement (10) umfasst, wobei das Gas in dem zweiten Hohlraum (9) strömen kann, wenn sich das Ventil (7) öffnet, und das Vibrationselement (10) betätigt wird;
- einen Vibrationssensor (11), der angepasst ist, um eine erste Vibration von dem Vibrationselement (10) zu erfassen und einen ersten Vibrationswert (12) zu erzeugen; und
- einen Prozessor (13), der angepasst ist, um den ersten Schwingungswert (12) aufzunehmen und zu verarbeiten und einen Querschnitt (14) des Drahtes (6) zu bestimmen.

2. Die Vorrichtung (1) nach dem Anspruch 1 umfasst:
- eine Nachschlagetabelle (15), die eine Ladestromkapazität für einen Draht in Bezug auf den Querschnitt des Drahtes umfasst,
wobei der Prozessor (13) angepasst ist, um die Nachschlagetabelle (15) abzufragen und eine Ladestromkapazität (16) des Drahtes (6) basierend auf dem Querschnitt (14) des Drahtes (6) zu identifizieren.

3. Die Vorrichtung nach einem der Ansprüche 1 oder 2, wobei das Vibrationselement (10) femer geeignet ist, mit einer geänderten Vibration zu schwingen, wenn ein Strom durch den Draht hindurch fließt, und das zu einer Ausdehnung des Gases durch Wärmeentwicklung im Draht führt, wobei der Vibrationssensor (11) geeignet ist, die geänderte Vibration zu erfassen und einen geänderten Vibrationswert (17) zu erzeugen, wobei der Prozessor (13) geeignet ist, den geänderten Vibrationswert (17) aufzunehmen und geeignet ist, den Stromfluss (18) durch den Draht zu identifizieren.

4. Die Vorrichtung (1) nach einem der Ansprüche 1 bis 3, wobei das Vibrationselement (10) ein bewegliches Element (19) und einen Satz von Federn (20) umfasst, wobei das Element (19) an seiner Oberfläche an den Federn (20) befestigt ist und die Federn (20) an einer Vorrichtung befestigt sind, die sich von einer Wand des Gasbehälters (8) oder der Wand des Behälters (8) selbst erstreckt, wobei das bewegliche Element (19) zum Schwingen geeignet ist, wenn ein Gasstrom in dem Gasbehälter (8) vorhanden ist, und der Schwingungssensor (11) zum Erfassen der Schwingung geeignet ist.

5. Die Vorrichtung (1) nach Anspruch 4, wobei das bewegliche Element (19) drehbar ist und mit zwei Federn (20) verbunden ist.

6. Vorrichtung (1) nach einem der Ansprüche 4 oder 5, wobei das bewegliche Element (19) in "S"-Form ausgebildet ist, so dass die Federn (20) an gekrümmten Abschnitten des Vibrationselements (19) an dem beweglichen Element (19) befestigt sind.

7. Die Vorrichtung (1) nach einem der Ansprüche 2 bis 5, wobei der Prozessor (13) angepasst ist, um die Schwingungswerte (12, 17) in verschiedenen Zeitintervallen zu empfangen, die Schwingungswerte (12, 17) zu verarbeiten und den Betrag (21) des Stromflusses während des Zeitintervalls zu messen.

8. Die Vorrichtung (1) nach einem der Ansprüche 2 bis 6, wobei das Gas einen hohen Ausdehnungskoeffizienten aufweist.

9. Verfahren zum Bestimmen eines betriebsbezogenen Parameters eines Drahtes (6), umfassend:
- Platzieren eines Drahtes in einen inneren Umfang (4) eines Körpers (2) einer Vorrichtung (1), wobei der Körper (2) durch einen äußeren Umfang (3) und einen inneren Umfang (4) definiert ist und einen ersten freien Raum (5) innerhalb des Körpers (2) aufweist, wobei der Körper (2) aus einem flexiblen Material besteht;
- Füllen des ersten leeren Raums (5) mit einem Gas zum Aufweiten des Körpers (2), so dass der Körper (2) in der Lage ist, einen Griff aus dem Draht (6) zu bilden;
- sobald der Körper (2) den Griff aus dem Draht (6) formt, ein Ventil (7) öffnet und das Gas aus dem Körper (2) in einen zweiten freien Raum (9) eines Gasbehälters (8) strömen lässt;
- Betätigen eines in dem Gasbehälter (8) vorgesehenen Vibrationselements (10), um eine erste Vibration durch den Gasstrom zu erzeugen;
- Erfassen der ersten Vibration durch einen Vibrationssensor (11) und Erzeugen eines ersten Vibrationswertes (12); und
- Empfangen und Verarbeiten des ersten Schwingungswertes (12) durch einen Prozessor (13) und Bestimmen eines Querschnitts (14) des Drahtes (6).

10. Verfahren nach Anspruch 9, umfassend:
- Abfragen einer Nachschlagetabelle (15) durch den Prozessor (13), wobei die Nachschlagetabelle (15) eine Ladestromkapazität für einen Draht in Bezug auf den Querschnitt des Drahtes umfasst; und
- Identifizieren einer Ladestromkapazität (16) des Drahtes (6) basierend auf dem Querschnitt (14) des Drahtes (6).

11. Verfahren nach Anspruch 10, umfassend:
- Schwingen des Vibrationselements (10) mit einer geänderten Vibration, wenn ein Strom durch den Draht (6) hindurch fließt;
- Ausdehnung des Gases durch Wärmeentwicklung im Draht (6);
- Erfassen der geänderten Vibration durch den Vibrationssensor (11) und Erzeugen eines geänderten Vibrationswertes (17); und
- Empfangen des geänderten Schwingungswertes (17) durch den Prozessor und Identifizieren des Stromflusses (18) durch den Draht (6).

12. Verfahren nach einem der Ansprüche 10 oder 11, umfassend das Empfangen der Schwingungswerte (12, 17) in verschiedenen Zeitintervallen durch den Prozessor (13), das Verarbeiten der Schwingungswerte (12, 17) durch den Prozessor (13) und das Messen der Menge (21) des Stromflusses während des Zeitintervalls.

## Revendications

1. Dispositif (1) pour déterminer un paramètre lié au fonctionnement d'un fil (6) comprenant :
- un corps (2) défini par un périmètre extérieur (3) et un périmètre intérieur (4) et ayant un premier espace vide (5) à l'intérieur du corps (2), dans lequel le corps (2) est fait d'un matériau flexible, dans lequel un fil (6) peut traverser le périmètre intérieur (4), le premier espace vide (5) est adapté pour être rempli avec un gaz pour étendre le corps (2) de manière que le corps forme une poignée sur le fil ;
- une vanne (7) pouvant être ouverte pour permettre l'écoulement du gaz hors du corps (2) ;
- un réservoir de gaz (8) comprenant un second espace vide (9) et un élément vibrant (10), dans lequel le gaz peut s'écouler dans le second espace vide (9) lorsque la vanne (7) s'ouvre et pour actionner l'élément vibrant (10) ;
- un capteur de vibration (11) adapté pour détecter une première vibration à partir de l'élément vibrant (10) et pour générer une première valeur de vibration (12) ; et
- un processeur (13) adapté pour recevoir et traiter la première valeur de vibration (12) et pour déterminer une section transversale (14) du fil (6).

2. Dispositif (1) selon la revendication 1 comprenant :
- une table de consultation (15) comprenant une capacité de courant de charge pour un fil par rapport à la section transversale du fil,
dans lequel le processeur (13) est adapté pour interroger la table de consultation (15) et pour identifier une capacité de courant de charge (16) du fil (6) sur la base de la section (14) du fil (6).

3. Dispositif selon l'une quelconque des revendications 1 ou 2, dans lequel l'élément vibrant (10) est en outre adapté pour vibrer avec une vibration modifiée lorsqu'un courant passe à travers le fil, et qui entraîne une expansion du gaz due à la production de chaleur dans le fil, le capteur vibrant (11) est adapté pour détecter la vibration modifiée et pour générer une valeur de vibration modifiée (17), le processeur (13) est adapté pour recevoir la valeur de vibration modifiée (17) et adapté pour identifier le flux (18) de courant passant dans le fil.

4. Dispositif (1) selon l'une quelconque des revendications 1 à 3, dans lequel l'élément vibrant (10) comprend un élément mobile (19) et un jeu de ressorts (20), dans lequel l'élément (19) est fixé aux ressorts (20) à sa surface et les ressorts (20) sont fixés à un support s'étendant à partir d'une paroi du récipient à gaz (8) ou de la paroi du récipient (8), l'élément mobile (19) est adapté à la vibration quand un courant gazeux se forme dans le récipient (8) et le capteur vibrant (11) est adapté pour saisir la vibration.

5. Dispositif (1) selon la revendication 4, dans lequel l'élément mobile (19) est rotatif et relié à deux ressorts (20).

6. Dispositif (1) selon l'une quelconque des revendications 4 ou 5, dans lequel l'élément mobile (19) est en forme de "S" de telle sorte que les ressorts (20) sont fixés à l'élément mobile (19) sur des parties courbes de l'élément vibrant (19).

7. Dispositif (1) selon l'une quelconque des revendications 2 à 5, dans lequel le processeur (13) est adapté pour recevoir les valeurs de vibration (12, 17) à différents intervalles de temps, pour traiter les valeurs de vibration (12, 17), et pour mesurer la quantité (21) de courant pendant l'intervalle de temps.

8. Dispositif (1) selon l'une quelconque des revendications 2 à 6, dans lequel le gaz présente un coefficient de dilatation élevé.

9. Procédé pour déterminer un paramètre lié au fonctionnement d'un fil (6) comprenant :
- placer un fil dans un périmètre interne (4) d'un corps (2) d'un dispositif (1), dans lequel le corps (2) est défini par un périmètre externe (3) et un périmètre interne (4) et présente un premier espace vide (5) dans le corps (2), le corps (2) étant réalisé en un matériau flexible ;
- remplir le premier espace vide (5) d'un gaz pour dilater le corps (2), de sorte que le corps (2) puisse former une prise sur le fil (6) ;
- une fois que le corps (2) forme la poignée sur le fil (6), ouvrir une soupape (7) et permettre l'écoulement du gaz hors du corps (2) dans un second espace vide (9) d'un réservoir de gaz (8) ;
- l'actionnement d'un élément vibrant (10) prévu dans le réservoir de gaz (8) pour fournir une première vibration due à l'écoulement du gaz ;
- détecter la première vibration par un capteur de vibration (11) et générer une première valeur de vibration (12) ; et
- la réception et le traitement de la première valeur de vibration (12) par un processeur (13) et la détermination d'une section transversale (14) du fil (6).

10. Procédé selon la revendication 9 comprenant :
- interroger une table de consultation (15) par le processeur (13), dans lequel la table de consultation (15) comprend une capacité de courant de charge pour un fil par rapport à la section du fil ; et
- identifier une capacité de courant de charge (16) du fil (6) sur la base de la section (14) du fil (6).

11. Procédé selon la revendication 10 comprenant :
- la vibration de l'élément vibrant (10) avec une vibration modifiée lorsqu'un courant traverse le fil (6) ;
- dilatation du gaz due à la production de chaleur dans le fil (6) ;
- détecter la vibration modifiée par le capteur de vibration (11), et générer une valeur de vibration modifiée (17) ; et
- recevoir la valeur de vibration modifiée (17) par le processeur et identifier le flux (18) de courant à travers le fil (6).

12. Procédé selon l'une quelconque des revendications 10 ou 11 comprenant la réception des valeurs de vibration (12, 17) à divers intervalles de temps par le processeur (13), le traitement des valeurs de vibration (12, 17) par le processeur (13), et la mesure de la quantité (21) de courant pendant l'intervalle de temps.
